# EUROPÄISCHE PATENTSCHRIFT

(11) **EP 3 224 748 B1**
(45) Veröffentlichungstag und Bekanntmachung des Hinweises auf die Patenterteilung: **10.04.2024**
(21) Anmeldenummer: 15805411.4
(22) Anmeldetag: 23.11.2015
(51) Int. Cl.: G05B 19/18, B23Q 5/34, G05B 19/4097, G06F 30/17, G06F 111/04

(54) **COMPUTERBASIERTES ENTWURFSSYSTEM FÜR EIN ELEKTRISCHES ANTRIEBSSYSTEM**
COMPUTER-BASED DESIGN SYSTEM FOR AN ELECTRIC DRIVE SYSTEM
SYSTÈME DE CONCEPTION ASSISTÉ PAR ORDINATEUR POUR SYSTÈME D'ENTRAÎNEMENT ÉLECTRIQUE

(30) Priorität: 24.11.2014 DE 102014223898
(43) Veröffentlichungstag der Anmeldung: 04.10.2017
(73) Patentinhaber: Lenze Automation GmbH, 31855 Aerzen (DE)
(72) Erfinder: SCHILGEN, Tobias, 32805 Horn-Bad Meinberg (DE); FÖSSING, Otmar, 31785 Hameln (DE)
(74) Vertreter: Patentanwälte Ruff, Wilhelm, Beier, Dauster & Partner mbB
(86) Internationale Anmeldenummer: PCT/EP2015/077383
(87) Internationale Veröffentlichungsnummer: WO 2016/083316

(56) Entgegenhaltungen:
- EP-A2- 1 148 398
- DE-A1- 10 104 795
- Jens Storz: "Interaktive Auslegung von Kurvenscheibengetrieben", , 16. April 2008 (2008-04-16), Seiten 1-70, XP055250277, Ilmenau, Germany Gefunden im Internet: URL:https://www.deutsche-digitale-biblioth ek.de/binary/XZK2XZ2CBE2ZKFIW3JRMAZCP3VDJS LDG/full/1.pdf [gefunden am 2016-02-16]

## Beschreibung

Die Erfindung betrifft ein computerbasiertes Entwurfssystem für ein elektrisches Antriebssystem.

Die Diplomarbeit Jens Storz: "Interaktive Auslegung von Kurvenscheibengetrieben", 16. April 2008 (2008-04-16), Seiten 1-70, XP055250277, Ilmenau, Germany zeigt einen computerbasierten Kurvenscheibeneditor mit einer grafischen Benutzeroberfläche, wobei die grafische Benutzeroberfläche dazu ausgebildet ist, basierend auf Benutzereingaben Werte von Parametern der Kurvenscheibe einzustellen. Das Entwurfssystem weist eine Überwachungseinrichtung auf, die überprüft, ob eine Kurvenscheibe vorgegebene Randbedingungen verletzt.

EP 1 148 398 A2 zeigt ein Eingabeverfahren für die Programmierung von industriellen Steuerungen.

Der Erfindung liegt die Aufgabe zugrunde, ein computerbasiertes Entwurfssystem für ein elektrisches Antriebssystem zur Verfügung zu stellen, das einen möglichst sicheren Betrieb des elektrischen Antriebssystems gewährleistet.

Die Erfindung löst diese Aufgabe durch ein computerbasiertes Entwurfssystem nach Anspruch 1.

Das computerbasierte Entwurfssystem dient als Entwurfswerkzeug für elektrische Antriebssysteme, mittels dem beispielsweise Bewegungsprofile der elektrischen Antriebssysteme entworfen werden können.

Das Entwurfssystem weist einen Kurvenscheibeneditor mit einer grafischen Benutzeroberfläche auf. Hinsichtlich der grundlegenden Funktion von Kurvenscheibeneditoren mit grafischen Benutzeroberflächen sei auch auf die einschlägige Fachliteratur verwiesen.

Die grafische Benutzeroberfläche des Kurvenscheibeneditors ist dazu ausgebildet, basierend auf Benutzereingaben Werte von Parametern eines Bewegungsprofils (bewegungsprofilcharakterisierende Parameter) des elektrischen Antriebssystems einzustellen. Die Benutzereingaben können mittels einer herkömmlichen Maus und/oder mittels einer Tastatur vorgenommen werden. Beispielsweise kann das Bewegungsprofil mittels der Maus hinsichtlich seiner Form, Höhe, Ausdehnung, usw. verändert werden, wobei für diesen Fall die Form, Höhe, Ausdehnung, usw. die Parameter bilden. Das Bewegungsprofil kann auch als Bewegungsbahn, Bewegungskurve oder Kurvenspur bezeichnet werden.

Das Entwurfssystem weist weiter einen Grenzwertespeicher auf, der dazu ausgebildet ist, vorgebbare Grenzwerte des Bewegungsprofils, die insbesondere durch physikalische Grenzwerte des elektrischen Antriebssystems bedingt sein können, zu speichern. Der Grenzwertespeicher kann beispielsweise als herkömmlicher nicht-flüchtiger Speicher eines Personal Computers ausgebildet sein. Die Grenzwerte können beispielsweise von einem spezifisch hierfür geschulten Experten vorgegeben bzw. errechnet werden. Die Grenzwerte können zulässige bzw. physikalisch mögliche Verläufe des Bewegungsprofils definieren. Mit anderen Worten definieren die Grenzwerte einen möglichen Einstellbereich der Parameter des Bewegungsprofils, wobei zwischen den Grenzwerten und den möglichen Parameter des Bewegungsprofils typisch ein bekannter mathematischer Zusammenhang besteht, der physikalische Eigenschaften des elektrischen Antriebssystems modelliert.

Das Entwurfssystem weist weiter eine Grenzwerteüberwachungseinrichtung auf, die dazu ausgebildet ist, zu überwachen, ob ein mittels einer Benutzereingabe eingegebener Wert eines Parameters dazu führen würde, dass ein oder mehrere der gespeicherten Grenzwerte durch das sich in Abhängigkeit von dem eingegebenen Wert des Parameters ergebende Bewegungsprofil verletzt werden würden, indem beispielsweise die gespeicherten Grenzwerte überschritten bzw. unterschritten werden.

Wenn ein oder mehrere der gespeicherten Grenzwerte durch das sich ergebende Bewegungsprofil verletzt würden, passt die Grenzwerteüberwachungseinrichtung den eingegebenen Wert des Parameters automatisch auf einen solchen Wert des Parameters an, dass keine der gespeicherten Grenzwerte durch das sich in Abhängigkeit von dem angepassten Wert des Parameters ergebende Bewegungsprofil verletzt werden.

Wenn keine der gespeicherten Grenzwerte durch das sich in Abhängigkeit von dem eingegebenen Wert des Parameters ergebende Bewegungsprofil verletzt werden, werden die Einstellungen unverändert übernommen.

Die Grenzwerteüberwachungseinrichtung kann beispielsweise als CPU und zugehörige Software eines Personal Computers verkörpert sein.

Das erfindungsgemäße Entwurfssystem bzw. Entwurfswerkzeug dient zum Entwurf eines Bewegungsprofils, insbesondere für eine Kurvenscheibe. Erfindungsgemäß werden vorgegebene antriebssystemspezifische physikalische Grenzwerte schon während des Editierens des Bewegungsprofils im Kurvenscheibeneditor überwacht und editierte Parameter gegebenenfalls auf solche Werte begrenzt, die sich aus den vorgegebenen Grenzwerten ergeben.

Hierzu können Extremwertanalysen (beispielsweise zur Berechnung von Grenzwerten in Form der maximalen Beschleunigung (bzw. eines Betrags der maximalen Beschleunigung), der maximalen Geschwindigkeit, des maximalen Rucks, usw.) im mathematischen Kurvenmodell des Bewegungsprofils mittels der Grenzwerteüberwachungseinrichtung ausgeführt werden, die zu einem entsprechend einschränkenden Verhalten des Kurvenscheibeneditors führen, so dass der Benutzer keine Einstellungen vornehmen kann, die im Ergebnis zu Grenz. bzw. Extremwertüberschreitungen führen.

Der Kurvenscheibeneditor kann das Bewegungsprofil bzw. die Kurvenspur in einzelne Segmente unterteilen. In jedem Segment kann der Anwender als Parameter des Bewegungsprofils einen Funktionstyp einer zugrunde liegenden Bewegungsgleichung (z. B. Polynom 5. Grades oder Sinusfunktion) bestimmen, sowie als weitere Parameter des Bewegungsprofils die (Segment-) Randwerte der Bewegungsgleichung. Randwerte sind diejenigen Funktionswerte, die das Bewegungsprofil bzw. die Kurvenspur am linken bzw. rechten Rand eines Segmentes erreichen soll. So werden als Parameter des Bewegungsprofils beispielsweise der y-Wert, der Geschwindigkeitswert und der Beschleunigungswert eines jeweiligen Randwerts vorgegeben. Das Bewegungsprofil bzw. der Kurvenverlauf innerhalb eines Segmentes ist somit eindeutig durch seine Randwerte und seinen Funktionstyp definiert.

Werden im Kurvenscheibeneditor Parameter eines Kurvensegmentes durch den Anwender verändert, so verändern sich zwangsläufig auch die Extremwerte der Kurve innerhalb des editierten Segmentes. Während des Editiervorgangs wird der vom Anwender gewünschte Wert nun automatisch mittels der Grenzwerteüberwachungseinrichtung geprüft, bevor die Einstellung übernommen wird. Führt beispielsweise das Verstellen eines Parameters in Form des Geschwindigkeitswertes eines rechten Randwertes eines Kurvensegmentes dazu, dass der maximale Positionswert innerhalb des Segmentes einen Grenzwert in Form des definierten Verfahrbereichs des Bewegungsprofils verlässt, so wird der vom Anwender vorgegebene Wert nicht übernommen.

Um dem Anwender ein Annähern an zulässige Grenzwerte eines Bewegungsprofils zu erleichtern, kann beispielsweise automatisch derjenige maximale Wert für den Geschwindigkeitsrandwert ermittelt werden, der einen Verlauf der Funktion innerhalb des definierten Verfahrbereichs gerade noch zulässt. Anders ausgedrückt wird beispielsweise das Maximum der Kurvenfunktion genau auf das Maximum des erlaubten Verfahrbereichs positioniert und der Geschwindigkeitsrandwert entsprechend vom System korrigiert.

Stellt der Anwender den Geschwindigkeitsrandwert eines Segmentes grafisch ein, ist der Kurvenscheibeneditor derart ausgebildet, dass das mittels des Kurvenscheibeneditors visualisierte Bewegungsprofil an die mittels der Grenzwerte definierte Grenze anstößt und sich nicht darüber hinaus verschieben oder "verbiegen" lässt. So bleibt der Verlauf des Bewegungsprofils stets im mittels der Grenzwerte definierten Sollbereich. Das erleichtert dem Anwender das Erstellen des Bewegungsprofils und vermeidet ungewünschte Betriebszustände des elektrischen Antriebssystems bereits in der Entwurfsphase.

Das oben Beschriebene gilt für weitere Parameter, beispielsweise in Form von einstellbaren Randwerten, gleichermaßen. Beim Einstellen eines Parameters in Form eines Randwertes (egal ob x- oder y-Position, Geschwindigkeit, Beschleunigung oder Ruck) kann grundsätzlich überprüft werden, ob die mittels der Grenzwerte definierten Extremwerte des Bewegungsprofils bzw. der zugehörigen Funktionsgleichung und ihrer Ableitungen eingehalten werden. Verletzt ein sich ergebender bzw. berechneter Extremwert Grenzwerte, so wird derjenige optimierte Parameterwert gesucht, der der Anwendereingabe am nächsten kommt.

Mögliche Grenzwerte sind beispielsweise: Einhaltung des Verfahrbereichs in x- und y-Richtung (= Überprüfung der Extremwerte der Wegfunktionen) und Einhaltung von Geschwindigkeits- und Beschleunigungsgrenzwerten, die vom konkreten physikalischen Antrieb vorgegeben werden (= Überprüfung der Extremwerte der Geschwindigkeits- und Beschleunigungsfunktionen).

Neben der isolierten Einzelsegmentbetrachtung kann auch eine Gesamtbetrachtung des Bewegungsprofils bzw. der der Kurvenspur stattfinden. Es ist möglich, dass die Einstellung eines Parameter bzw. Randwertes in einem Segment auch das benachbarte Segment beeinflusst. Diese Beeinflussung kann sich im Extremfall über die gesamte Kurvenspur in einer Kettenreaktion fortsetzen. Auch dieser Fall wird mittels der Grenzwerteüberwachungseinrichtung geprüft, so dass stets der gesamte Kurvenverlauf des Bewegungsprofils innerhalb der vorgegebenen Grenzwerte bleibt.

Die beschriebene Kettenreaktion kommt dadurch zustande, dass der Anwender die Parameter- bzw. Randwerteinstellung eines Kurvensegmentes mit dem Wert des Nachbarsegmentes verknüpfen kann. So wird eine durchgehend stetige Kurve automatisch erreicht. Das bedeutet, dass beispielsweise der rechte Geschwindigkeitsrandwert eines Segmentes automatisch mit dem linken Geschwindigkeitsrandwert des rechten Nachbarsegmentes gleichgesetzt wird. Somit kann die Änderung eines Segmentrandwertes eine Änderung des Kurvenverlaufs im Nachbarsegment bewirken. In diesem Fall muss vor dem Akzeptieren eines Anwendervorgabewertes geprüft werden, ob alle abhängigen Segmente ebenfalls ihre definierten Grenzwerte nicht überschreiten.

Eine Grenzwertüberschreitung des gesamten Kurvenverlaufes wird erfindungsgemäß vermieden. Wenn beispielsweise der Verfahrbereich erweitert werden soll, kann der Anwender jederzeit die Grenzwerte in Form der Verfahrbereichsdefinition für das Bewegungsprofil anpassen. Auch dabei wird überprüft, dass die Kurve stets im definierten Bereich bleibt. So ist der Anwender beispielsweise gezwungen, zunächst die Kurvenausdehnung in vertikaler Richtung zu reduzieren, bevor er die vertikale maximale Ausdehnung des Verfahrbereichs reduzieren kann.

Die einstellbaren Parameter des Bewegungsprofils können sein oder umfassen: Stützstellen des Bewegungsprofils, und/oder Koordinaten der Stützstellen des Bewegungsprofils, und/oder eine Steigung des Bewegungsprofils (an einer beliebigen Position des Bewegungsprofils), und/oder ein Kurvenverlauf des Bewegungsprofils, und/oder ein Verfahrbereich des Bewegungsprofils, und/oder Segmente des Bewegungsprofils, und/oder Segmentgrenzen des Bewegungsprofils (d.h. Segmentrandwerte), und/oder eine Beschleunigung des Bewegungsprofils (an einer beliebigen Position des Bewegungsprofils), und/oder ein Ruck des Bewegungsprofils (an einer beliebigen Position des Bewegungsprofils) und/oder Typen von Segmenten des Bewegungsprofils.

Die Grenzwerte können eine Maximalgeschwindigkeit des Bewegungsprofils, eine Maximalbeschleunigung des Bewegungsprofils bzw. ein Betrag der Maximalbeschleunigung des Bewegungsprofils, einen maximalen Verfahrbereich und/oder einen maximalen Ruck des Bewegungsprofils definieren bzw. sein.

Die Erfindung betrifft weiter ein computerbasiertes Entwurfssystem für ein elektrisches Antriebssystem mit einen Kurvenscheibeneditor mit einer grafischen Benutzeroberfläche, wobei die grafische Benutzeroberfläche dazu ausgebildet ist, basierend auf Benutzereingaben Werte von Parametern eines Bewegungsprofils des elektrischer Antriebssystems einzustellen. Der Kurvenscheibeneditor ist dazu ausgebildet, Benutzereingaben zur Verfügung zu stellen, mittels derer zuvor, beispielsweise mit einer zugeordneten Maustaste, selektierte Parameter, insbesondere in Form von einzelnen oder mehreren Segmenten des Bewegungsprofils, vertikal oder horizontal verschoben werden, wobei der Kurvenscheibeneditor einen ersten Einstellmodus aufweist, während dem zuvor selektierte Parameter bzw. Segmente ausschließlich horizontal verschiebbar sind, und wobei der Kurvenscheibeneditor einen zweiten Einstellmodus aufweist, während dem zuvor selektierte Parameter bzw. Segmente ausschließlich vertikal verschiebbar sind.

Erfindungsgemäß werden eine vertikale und eine horizontale Verschiebung in getrennten Bedienvorgängen durchgeführt. Durch das Aufteilen in die zwei Richtungskomponenten "Horizontale Verschiebung" und "Vertikale Verschiebung" werden Fehleingaben vermieden. Die Bedienung der grafischen Verschiebung ist ohne Tastatureingabe möglich und damit anwenderfreundlich und einfach. Die Funktionsweise erschließt sich nahezu intuitiv, d. h. der Anwender benötigt im Idealfall noch nicht einmal eine Bedienungsanleitung. Er kann schon durch einfaches Ausprobieren die Funktionsweise herausfinden - der Mauszeiger zeigt an, was der Anwender machen darf.

Der Kurvenscheibeneditor implementiert folgende Bedienlogik:
Das Segment bzw. eine Mehrzahl von Segmenten wird zunächst markiert, beispielsweise durch Anklicken eines einzelnen Segments bzw. Bereichsauswahl über mehrere auszuwählende Segmente, wobei die Bereichsauswahl über einen mittels der Maus aufziehbaren Rechteckbereich derart erfolgen kann, dass alle Segmente innerhalb des Rechteckbereichs markiert werden.

Das bzw. die ausgewählten Segmente kann/können vertikal verschoben werden, solange sie zwischen den Endpunkten mit der Maus mit betätigter Maustaste verschoben werden, wobei nur die Y-Komponente der Mausbewegung verwendet wird. Im Rahmen des Vorgangs zeigt der Mauszeiger durch ein bestimmtes Symbol (beispielsweise vertikale Pfeile) an, dass diese Aktion bei Betätigung der dazu vorgesehenen Maustaste durchgeführt werden kann.

Das bzw. die ausgewählten Segmente kann/können horizontal verschoben werden, wenn die dazu vorgesehene Maustaste gedrückt wird und sich der Mauszeiger im horizontalen Fangbereich eines Endpunktes befindet und sich der Mauszeiger nicht im Fangbereich wenigstens eines vertikalen Segmenttrenners befindet.

Die Segmentabschnitte werden derart dargestellt, dass die Endpunkte durch vertikale Linien, die sogenannten Segmentrenner, verdeutlicht werden. Wenn diese außerhalb eines Kurvenendpunktes angefasst werden, können damit die markierten Segmente horizontal verschoben werden. Im Rahmen des Vorgangs zeigt der Mauszeiger durch ein bestimmtes Symbol (beispielsweise horizontale Pfeile) an, dass diese Aktion bei Betätigung der bestimmten Maustaste durchgeführt werden kann.

So kann bei Bedarf die Definition des Bewegungsprofils in zwei Phasen geteilt werden: in Phase 1 werden mit dem Benutzer zusammen die Bewegungsabschnitte (Segmente) definiert und horizontale Bereiche festgelegt. In Phase 2 können die Segmente noch verändert werden: ein Bewegungsgesetz wird ausgewählt, der Kurvenverlauf innerhalb eines Segmentes wird optimiert etc. Dabei sollen aber nicht versehentlich die mit dem Kunden definierten horizontalen Bereiche (= Segmente) der Kurvenspur verschoben werden.

Die Erfindung betrifft weiter ein computerbasiertes Entwurfssystem für ein elektrisches Antriebssystem mit einen Kurvenscheibeneditor mit einer grafischen Benutzeroberfläche, wobei die grafische Benutzeroberfläche dazu ausgebildet ist, basierend auf Benutzereingaben Werte von Parametern eines Bewegungsprofils des elektrischer Antriebssystems einzustellen. Das Entwurfssystem ist dazu ausgebildet, ein tatsächlich von dem Antriebssystem ausgeführtes Bewegungsprofil, insbesondere in Echtzeit, zu visualisieren.

Dies ermöglicht es während einer Inbetriebnahme, die korrekte Abarbeitung des projektierten Bewegungsprofils online zu verfolgen. Die Position einer Masterachse kann dazu grafisch im Kurvenscheibeneditor dargestellt werden.

Diese Funktion ist in der Regel während der Inbetriebnahme bei langsamem Bewegen der Masterachse bzw. des Mastersignals hilfreich. Es wird visuell überprüfbar gemacht, welche Kurvendaten aktuell in Ausführung sind.

Die Aktivierung der erfindungsgemäßen Onlinedarstellung kann dadurch erfolgen, dass eine Linealfunktion um einen zusätzlichen Modus erweitert wird. Das Lineal kann aktiv, deaktiv oder im Automatikmodus sein. Im Automatikmodus folgt das Lineal der Masterposition. Es gibt immer nur ein Lineal, das gleichzeitig angezeigt wird. Dadurch ist die Eindeutigkeit und Verstehbarkeit für den Anwender gegeben.

Das Entwurfssystem ist dazu ausgebildet, Abweichungen eines mittels des Entwurfssystems projektierten Bewegungsprofils von einem basierend auf dem projektierten Bewegungsprofil tatsächlich von dem Antriebssystem ausgeführten Bewegungsprofil zu visualisieren.

Die Erfindung wird nachfolgend unter Bezugnahme auf die Zeichnungen detailliert beschrieben. Hierbei zeigen schematisch:
- Fig. 1: ein Blockschaltbild eines computerbasierten Entwurfssystems,
- Fig. 2: eine grafische Benutzeroberfläche des in Fig.1 gezeigten Entwurfssystems,
- Fig. 3: die grafische Benutzeroberfläche des in Fig.1 gezeigten Entwurfssystems bei einem vertikalen Verschiebevorgang einer Segmentgruppe,
- Fig. 4: die grafische Benutzeroberfläche des in Fig.1 gezeigten Entwurfssystems bei einem horizontalen Verschiebevorgang der Segmentgruppe,
- Fig. 5: die grafische Benutzeroberfläche des in Fig.1 gezeigten Entwurfssystems, wenn der horizontale Verschiebevorgang gesperrt ist, und
- Fig. 6: die grafische Benutzeroberfläche des in Fig.1 gezeigten Entwurfssystems in einem Online-Modus.

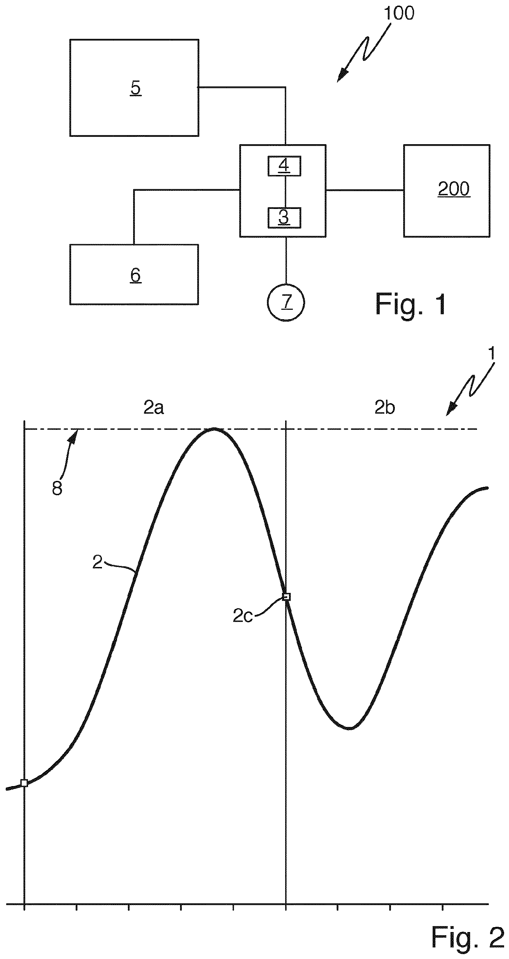

Fig. 1 zeigt hoch schematisch ein Blockschaltbild eines computerbasierten Entwurfssystems 100 für ein elektrisches Antriebssystem 200. Das Entwurfssystem 100 weist einen Bildschirm 5, einen nicht-flüchtigen Grenzwertespeicher 3, eine Grenzwerteüberwachungseinrichtung 4, eine Tastatur 6 und eine Maus 7 auf. Der Grenzwertespeicher 3 und die Grenzwerteüberwachungseinrichtung 4 können mittels eines herkömmlichen Personal Computers in Hardware und/oder Software realisiert sein.

Fig. 2 zeigt eine grafische Benutzeroberfläche 1 des in Fig.1 gezeigten Entwurfssystems 100, welches auf dem Bildschirm 5 dargestellt wird.

Die Benutzeroberfläche 1 ist Teil eines erfindungsgemäßen Kurvenscheibeneditors. Die grafische Benutzeroberfläche 1 ist dazu ausgebildet, basierend auf Benutzereingaben in Form von Mausbedienaktionen und Tastatureingaben Werte von Parametern eines Bewegungsprofils 2 des elektrischer Antriebssystems 200 einzustellen.

Die X-Achse des Bewegungsprofils 2 bezeichnet eine so genannte Master-Achse und die Y-Achse bezeichnet eine so genannte Slave-Achse mit ihrem Verfahrbereich.

Das in Fig. 2 dargestellte Bewegungsprofil 2 weist zwei benachbarte Segmente 2a und 2b auf. Ein einstellbarer Parameter des Bewegungsprofils 2 ist beispielsweise eine Geschwindigkeit an einem Grenz- bzw. Randwert 2c an der Segmentgrenze zwischen den Segmenten 2a und 2b. Im Übrigen sei zu Bewegungsprofilen auch auf die einschlägige Fachliteratur verwiesen.

Wenn ein Benutzer die Geschwindigkeit an dem Randwert 2c vergrößert, ändert sich in Folge der Kurvenverlauf des Bewegungsprofils 2, wobei sich ein Maximum (maximaler Positionswert in Y-Richtung) des Bewegungsprofils 2 im Segment 2a vergrößert.

Da jedoch ein Verfahrbereich in Y-Richtung durch einen Grenzwert in Form eines physikalisch möglichen Verfahrbereichs 8 des Antriebssystems 200 begrenzt ist, wird mittels der Grenzwerteüberwachungseinrichtung 4 die vom Anwender gewünschte Geschwindigkeit am Randwert 2c unter anderem automatisch im Hinblick darauf überwacht, ob das Maximum des sich bei der Änderung einstellenden Bewegungsprofils 2 den Grenzwert in Form des physikalisch möglichen Verfahrbereichs 8 überschreitet. Ist dies der Fall, wird der vom Anwender vorgegebene Parameterwert nicht übernommen. Stattdessen wird automatisch derjenige maximale Wert für die Geschwindigkeit am Randwert 2c ermittelt und eingestellt, der einen Verlauf der Bewegungsprofils 2 innerhalb des definierten Verfahrbereichs 8 gerade noch zulässt, siehe Fig. 2. Anders ausgedrückt wird das Maximum der Bewegungsprofils 2 genau auf das Maximum des erlaubten Verfahrbereichs 8 positioniert und die Geschwindigkeit entsprechend vom System korrigiert.

Der Grenzwertespeicher 3 speichert eine Vielzahl von Grenzwerten des Bewegungsprofils 2, beispielsweise den physikalisch möglichen Verfahrbereich 8. Weitere Grenzwerte können eine Maximalgeschwindigkeit, eine Maximalbeschleunigung, einen maximalen Ruck und/oder Segmentgrenzen des Bewegungsprofils definieren bzw. darstellen.

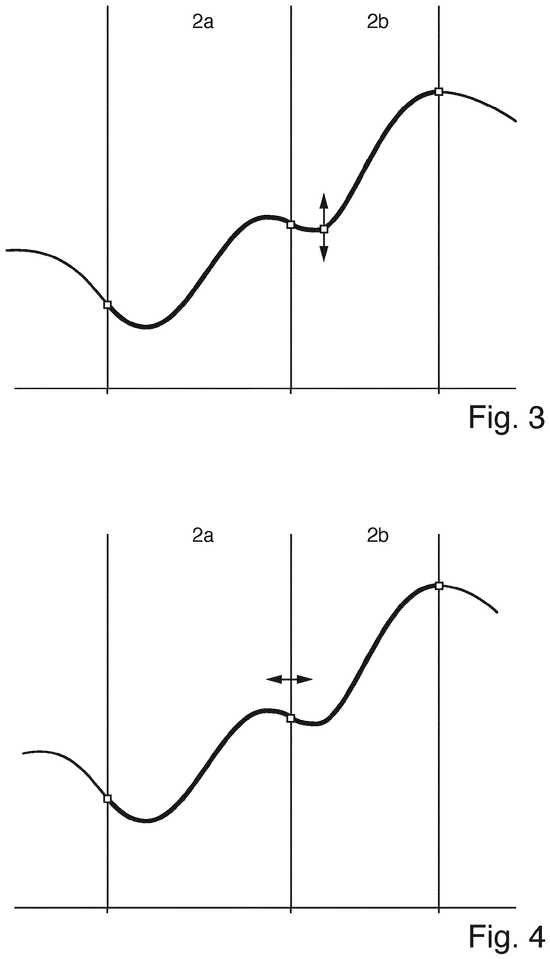

Fig. 3 zeigt die grafische Benutzeroberfläche 1 des in Fig.1 gezeigten Entwurfssystems 100 bei einem vertikalen Verschiebevorgang einer Segmentgruppe bestehend aus den Segmenten 2a und 2b, die in Fig. 3 einen bezogen auf Fig. 2 andere Verläufe aufweisen. Nachfolgend wird das Verschieben der Segmentgruppe beschrieben. Das Verschieben eines einzelnen Segments erfolgt entsprechend.

Die Segmentgruppe wird zunächst markiert, beispielsweise durch Anklicken der Einzelsegmente 2a und 2b bzw. Bereichsauswahl über diese. Eine Auswahl mehrerer Segmente kann mittels eines mit der Maus 7 aufziehbaren Rechteckbereichs derart erfolgen, dass alle Segmente zur Segmentgruppe hinzugefügt werden, deren beide horizontale Endpunkte im Bereich des Rechtecks liegen.

Die Segmentgruppe kann vertikal verschoben werden, solange sie zwischen den gewünschten Endpunkten mit der Maus mit betätigter Maustaste verschoben wird, wobei nur die Y-Komponente der Mausbewegung verwendet wird, siehe Fig. 3.

Im Rahmen des Verschiebevorgangs zeigt der Mauszeiger durch ein bestimmtes Symbol an, hier vertikale Pfeile, dass das vertikale Verschieben bei Betätigung der dazu vorgesehenen Maustaste durchgeführt werden kann.

Die Segmentgruppe kann horizontal verschoben werden, wenn die dazu vorgesehene Maustaste gedrückt wird und sich der Mauszeiger im horizontalen Fangbereich eines Segment-Endpunktes befindet und der Mauszeiger nicht im Fangbereich wenigstens eines vertikalen Segmenttrenners ist, siehe Fig. 4. Die Segmente werden derart dargestellt, dass deren horizontale Endpunkte durch vertikale Linien, den sogenannten Segmentrennern, verdeutlicht werden. Wenn diese außerhalb eines Kurvenendpunktes mittels der Maus 7 "angefasst" werden, können damit die markierten Segmente 2a und 2b horizontal verschoben werden.

Im Rahmen dieses horizontalen Verschiebevorgangs zeigt der Mauszeiger durch ein bestimmtes Symbol an, hier horizontale Pfeile, dass diese Aktion bei Betätigung der bestimmten Maustaste durchgeführt werden kann.

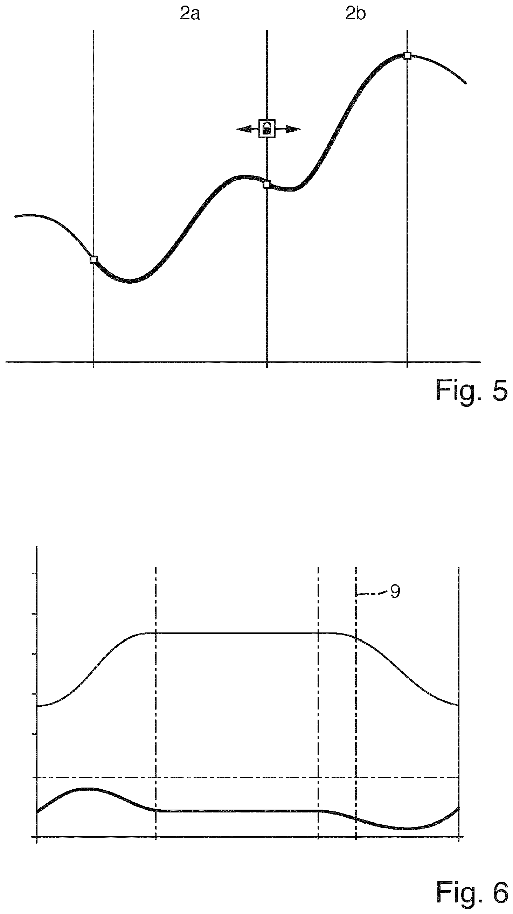

Um ungewollte horizontale Verschiebungen der Endpunkte zu vermeiden, können diese zusätzlich gegen horizontale Verschiebung gesperrt werden. Das kann global erfolgen, beispielsweise durch einen Schalter mit Schlosssymbol, es ist jedoch auch eine Einzelsperrung denkbar. Der gesperrte Zustand eines Segmentes wird dem Anwender durch Einblenden eines Schlosssymbols im Mauszeiger angezeigt, in der Situation wenn der Mauszeiger im ungesperrten Zustand die Verschiebbarkeit anzeigt, also beispielsweise beim Überfahren eines Segmenttrenners mit der Maus, siehe Fig. 5.

So kann bei Bedarf die Definition des Bewegungsprofils in zwei Phasen geteilt werden: in Phase 1 werden zunächst Segmente definiert und horizontale Bereiche festgelegt. In Phase 2 können die Segmente noch verändert werden: ein Bewegungsgesetz wird ausgewählt, der Kurvenverlauf innerhalb eines Segmentes wird optimiert etc. Dabei sollen aber nicht versehentlich die definierten horizontalen Bereiche (= Segmente) des Bewegungsprofils bzw. der Kurvenspur verschoben werden.

Dies ermöglicht eine intuitive Bedienung mit Schutz gegen Fehlbedienung. Eine Tastatur ist für die beschriebenen Funktionen nicht zwingend erforderlich.

Fig. 6 zeigt die grafische Benutzeroberfläche 1 des in Fig.1 gezeigten Entwurfssystems 100 in einem so genannten Online-Modus, während dem das Entwurfssystem 100 mit dem Antriebssystem 200 in Datenverbindung steht. Oben ist die Position in Abhängigkeit von der Masterachsposition, unten die Geschwindigkeit in Abhängigkeit von der Masterachsposition dargestellt.

Der Online-Modus erlaubt das Verfolgen des aktuell im Antriebssystem 200 abgearbeiteten Bewegungsprofils mittels einer Markierung 9, die im Online-Modus automatisch der Masterachsenposition (X-Achse) folgt. Dargestellt wird die Markierung 9 durch die im Editor enthaltene Linealfunktion. Die Markierung bzw. das Lineal 9 folgt im Automatikmodus der Masterposition und es wird angezeigt, ob die gerade im Entwurfssystem 100 dargestellte Kurve bzw. das dargestellte Bewegungsprofil auch genau der Kurve bzw. dem Bewegungsprofil, die bzw. das sich im Antriebssystem in Ausführung befindet, entspricht.

Der Online-Modus ist in der Regel während der Inbetriebnahme bei langsamem Bewegen der Masterachse bzw. des Mastersignals hilfreich. Es geht um den Fall der Justierung und Prüfung einer Maschine. Es wird visuell überprüfbar gemacht, welche Kurvendaten aktuell in Ausführung sind.

Die Aktivierung des Online-Modus erfolgt für den Anwender einfach versteh- und anwendbar: es wird die vorhandene Linealfunktion erweitert um einen zusätzlichen Modus. Das Lineal kann aktiv, deaktiv oder im Automatikmodus sein. Im Automatikmodus folgt das Lineal der Masterposition. Es gibt immer nur ein Lineal, das gleichzeitig angezeigt wird. Dadurch ist die Eindeutigkeit und Verstehbarkeit für den Anwender gegeben. Der Ein-/Ausschalter des Lineals in der Werkzeugaufrufleiste des Editors (oberer Bildschirmbereich, siehe 6. Schaltknopf von Links mit blauem Icon in unten gezeigter Abbildung) erhält einen zusätzlichen 3. Schaltzustand, der dem aktiven Automatikmodus entspricht. Dieser ist nur schaltbar, wenn der Editor sich im Onlinemodus befindet, d. h. die Programmierumgebung mit dem Gerät verbunden ist.

## Patentansprüche

1. Computerbasiertes Entwurfssystem (100) für ein elektrisches Antriebssystem (200), aufweisend:
- einen Kurvenscheibeneditor mit einer grafischen Benutzeroberfläche (1), wobei die grafische Benutzeroberfläche (1) dazu ausgebildet ist, basierend auf Benutzereingaben Werte von Parametern eines Bewegungsprofils (2) des elektrischen Antriebssystems (200) einzustellen,
- einen Grenzwertespeicher (3), der dazu ausgebildet ist, Grenzwerte (8) des Bewegungsprofils (2) zu speichern, und
- eine Grenzwerteüberwachungseinrichtung (4), die dazu ausgebildet ist, zu überwachen, ob ein mittels einer Benutzereingabe eingegebener Wert eines Parameters bewirkt, dass ein oder mehrere der gespeicherten Grenzwerte (8) durch das sich ergebende Bewegungsprofil (2) verletzt werden, und für den Fall, dass ein oder mehrere der gespeicherten Grenzwerte (8) durch das sich ergebende Bewegungsprofil (2) verletzt werden, den eingegebenen Wert des Parameters auf einen solchen Wert des Parameters anzupassen, dass keine der gespeicherten Grenzwerte (8) durch das sich ergebende Bewegungsprofil (2) verletzt werden,
- wobei das Entwurfssystem dazu ausgebildet ist, ein von dem Antriebssystem (200) ausgeführtes Bewegungsprofil zu visualisieren, und
- wobei das Entwurfssystem dazu ausgebildet ist, Abweichungen eines mittels des Entwurfssystems projektierten Bewegungsprofils (2) von einem basierend auf dem projektierten Bewegungsprofil von dem Antriebssystem (200) ausgeführten Bewegungsprofil (2) zu visualisieren.

2. Entwurfssystem (100) nach Anspruch 1, **dadurch gekennzeichnet, dass**
- die Parameter des Bewegungsprofils (2) umfassen: Stützstellen des Bewegungsprofils (2), Koordinaten der Stützstellen des Bewegungsprofils (2), eine Steigung des Bewegungsprofils (2), ein Kurvenverlauf des Bewegungsprofils (2), ein Verfahrbereich des Bewegungsprofils (2), Segmente des Bewegungsprofils (2), Segmentgrenzen des Bewegungsprofils (2), Geschwindigkeiten an Segmentgrenzen des Bewegungsprofils (2), Segmentrandwerte des Bewegungsprofils (2), eine Beschleunigung des Bewegungsprofils (2), ein Ruck des Bewegungsprofils (2) und/oder Typen von Segmenten des Bewegungsprofils (2).

3. Entwurfssystem (100) nach Anspruch 1 oder 2, **dadurch gekennzeichnet, dass**
- die Grenzwerte eine Maximalgeschwindigkeit, eine Maximalbeschleunigung, einen maximalen Ruck, einen maximalen Verfahrbereich, und/oder Segmentgrenzen des Bewegungsprofils (2) definieren.

4. Entwurfssystem (100) nach einem der vorhergehenden Ansprüche, **dadurch gekennzeichnet, dass**
- der Kurvenscheibeneditor dazu ausgebildet ist, Benutzereingaben zur Verfügung zu stellen, mittels derer zuvor selektierte Parameter vertikal oder horizontal verschoben werden, wobei der Kurvenscheibeneditor einen ersten Einstellmodus aufweist, während dem zuvor selektierte Parameter ausschließlich horizontal verschiebbar sind, und wobei der Kurvenscheibeneditor einen zweiten Einstellmodus aufweist, während dem zuvor selektierte Parameter ausschließlich vertikal verschiebbar sind.

## Claims

1. Computer-based design system (100) for an electrical drive system (200), having:
- a cam disc editor having a graphical user interface (1), wherein the graphical user interface (1) is designed to set values of parameters of a motion profile (2) of the electrical drive system (200) on the basis of user inputs,
- a limit value memory (3) which is designed to store limit values (8) of the motion profile (2), and
- a limit value monitoring device (4) which is designed to monitor whether a value of a parameter that is input by means of a user input causes one or more of the stored limit values (8) to be violated by the resulting motion profile (2), and, if one or more of the stored limit values (8) are violated by the resulting motion profile (2), to adjust the input value of the parameter to a value of the parameter such that none of the stored limit values (8) is violated by the resulting motion profile (2),
- wherein the design system is designed to visualize a motion profile performed by the drive system (200), and
- wherein the design system is designed to visualize deviations of a motion profile (2) projected by means of the design system from a motion profile (2) performed by the drive system (200) on the basis of the projected motion profile.

2. Design system (100) according to claim 1, **characterized in that**
- the parameters of the motion profile (2) comprise: supporting points of the motion profile (2), coordinates of the supporting points of the motion profile (2), a gradient of the motion profile (2), a curve shape of the motion profile (2), a travel range of the motion profile (2), segments of the motion profile (2), segment borders of the motion profile (2), speeds at segment borders of the motion profile (2), segment boundary values of the motion profile (2), an acceleration of the motion profile (2), a jerk of the motion profile (2) and/or types of segments of the motion profile (2).

3. Design system (100) according to claim 1 or 2, **characterized in that**
- the limit values define a maximum speed, a maximum acceleration, a maximum jerk, a maximum travel range and/or segment borders of the motion profile (2).

4. Design system (100) according to one of the preceding claims, **characterized in that**
- the cam disc editor is designed to provide user inputs which are used to vertically or horizontally shift previously selected parameters, wherein the cam disc editor has a first adjustment mode, during which previously selected parameters can be shifted only horizontally, and wherein the cam disc editor has a second adjustment mode, during which previously selected parameters can be shifted only vertically.

## Revendications

1. Système de conception assistée par ordinateur (100) pour un système d'entraînement électrique (200), présentant :
- un éditeur de came avec une interface utilisateur graphique (1), l'interface utilisateur graphique (1) étant configurée pour ajuster des valeurs de paramètres d'un profil de mouvement (2) du système d'entraînement électrique (200) sur la base d'entrées d'utilisateur,
- une mémoire de valeurs limites (3), qui est configurée pour stocker des valeurs limites (8) du profil de mouvement (2), et
- un système de surveillance de valeur limite (4), qui est configuré pour surveiller si une valeur d'un paramètre entrée au moyen d'une entrée d'utilisateur fait qu'une ou plusieurs des valeurs limites stockées (8) sont violées par le profil de mouvement résultant (2), et dans le cas où une ou plusieurs des valeurs limites stockées (8) sont violées par le profil de mouvement résultant (2), pour ajuster la valeur entrée du paramètre à une valeur du paramètre telle qu'aucune des valeurs limites stockées (8) n'est violée par le profil de mouvement résultant (2),
- dans lequel le système de conception est configuré pour visualiser un profil de mouvement exécuté par le système d'entraînement (200), et
- dans lequel le système de conception est configuré pour visualiser des écarts entre un profil de mouvement (2) projeté au moyen du système de conception et un profil de mouvement (2) exécuté par le système d'entraînement (200) sur la base du profil de mouvement projeté.

2. Système de conception (100) selon la revendication 1, **caractérisé en ce que**
- les paramètres du profil de mouvement (2) comprennent : des points d'appui du profil de mouvement (2), des coordonnées des points d'appui du profil de mouvement (2), une pente du profil de mouvement (2), une courbe du profil de mouvement (2), une zone de déplacement du profil de mouvement (2), des segments du profil de mouvement (2), des limites de segment du profil de mouvement (2), des vitesses aux limites de segment du profil de mouvement (2), des valeurs de bord de segment du profil de mouvement (2), une accélération du profil de mouvement (2), une secousse du profil de mouvement (2) et/ou des types de segments du profil de mouvement (2).

3. Système de conception (100) selon la revendication 1 ou 2, **caractérisé en ce que**
- les valeurs limites définissent une vitesse maximale, une accélération maximale, une secousse maximale, une zone de déplacement maximale, et/ou des limites de segment du profil de mouvement (2).

4. Système de conception (100) selon l'une quelconque des revendications précédentes, **caractérisé en ce que**
- l'éditeur de came est configuré pour fournir des entrées d'utilisateur au moyen desquelles des paramètres précédemment sélectionnés sont déplacés verticalement ou horizontalement, l'éditeur de came présentant un premier mode de réglage pendant lequel des paramètres précédemment sélectionnés peuvent être déplacés exclusivement horizontalement, et l'éditeur de came présentant un second mode de réglage pendant lequel des paramètres précédemment sélectionnés peuvent être déplacés exclusivement verticalement.
